## Europäisches Patentamt

## European Patent Office

## Office européen des brevets

(11) Veröffentlichungsnummer: **0 133 161**
**B1**

(12) **EUROPÄISCHE PATENTSCHRIFT**

(45) Veröffentlichungstag der Patentschrift:
06.04.88

(51) Int. Cl.⁴: **B 25 D 17/24**, F 16 F 9/50

(21) Anmeldenummer: **84810334.7**

(22) Anmeldetag: **06.07.84**

(54) Verfahren und Vorrichtung zur Dämpfung des Rückpralles bei Schlagwerkzeugen.

(30) Priorität: **21.07.83 CH 4010/83**

(43) Veröffentlichungstag der Anmeldung:
**13.02.85 Patentblatt 85/7**

(45) Bekanntmachung des Hinweises auf die Patenterteilung:
**06.04.88 Patentblatt 88/14**

(84) Benannte Vertragsstaaten:
**AT CH DE FR GB IT LI SE**

(56) Entgegenhaltungen:
**CH-A-398 467**
**DE-A-1 954 936**
**DE-A-2 654 200**
**FR-A-2 456 593**
**US-A-4 363 365**

(73) Patentinhaber: **SIG Schweizerische Industrie-Gesellschaft, CH- 8212 Neuhausen am Rheinfall (CH)**

(72) Erfinder: **Steiner, Heinz, Im Gärtli, CH- 8211 Dörflingen (CH)**

(74) Vertreter: **White, William, PATENTANWALTS-BUREAU ISLER AG Postfach 6940 Walchestrasse 23, CH- 8023 Zürich (CH)**

## Beschreibung

Die vorliegende Erfindung betrifft ein Verfahren zur Dämpfung des Rückpralles bei Schlagwerkzeugen gemäss dem Oberbegriff des unabhängigen Patentanspruchs 1, sowie eine Vorrichtung zur Durchführung des Verfahrens gemäss dem Oberbegriff des unabhängigen Patentanspruchs 3.

Bei herkömmlichen Gesteinsbohrmaschinen werden Federanordnungen zur Dämpfung des Rückpralles verwendet. Dadurch wird der Rückprall vorwiegend durch die Vorschubkraft aufgenommen und der Bedienungsmann bzw. die Vorschublafette müssen daher alle Schläge aufnehmen.

Aus der DE-B-26 10 990 ist ein Verfahren gemäss Obergriff des Anspruchs 1 bekannt geworden, bei dem die Vorschubkraft und/oder der Druck in der Dämpfungskammer im Verhältnis zur Stärke der Rückschlagkräfte derart eingestellt werden, dass der Dämpferkolben und die Futterbüchse für das Bohrwerkzeug ohne axiale Berührung mit dem Gerätegehäuse bleiben. Die Dämpferkammer wird kontinuierlich mit einem Druckfluid mit einstellbarem Druck beaufschlagt.

Das dargestellte Ausführungsbeispiel zeigt eine Futterbüchse für das Bohrwerkzeug mit einer hohlzylindrischen Verlängerung im Bereich der den Hammer bildenden Kolbenstange und mit einer zwischen einer die Kolbenstange führenden Büchse als innere Wandung und der Gerätegehäusewand als äussere Wand befindlichen, einen Dämpferkolben bildenden Verdickung. In die damit gebildete Dämpferkammer wird Druckfluid über ein einstellbares Reduzierventil und ein Rückschlagventil geleitet.

Mit dieser Anordnung wird ein Luftkissen zwischen der den Rückprall des Bohrwerkzeugs aufnehmenden Futterbüchse und dem Gerätegehäuse gebildet. Jeder Rückprall bewirkt eine polytropische Kompression des Luftkissens.

Wenn die Anpresskraft durch menschliche Kraft aufgebracht wird, kann sich dieselbe zwischen 0 kg und etwa 80 kg ändern. Somit muss der Druck in der Dämpferkammer entsprechend angepasst werden. Dies ist bei der oben beschriebenen Anordnung sehr aufwendig. Es ist wohl ein Einstellorgan vorhanden, aber dieses müsste bei jeder Druckkraftveränderung verstellt werden. Es wäre für einen guten Dämpfungseffekt erwünscht, den Druck in der Dämpferkammer so niedrig wie möglich zu halten. Bei zu niedrigem Druck findet aber durch den Rückprall eine Berührung von Dämpferkolben und Gehäuse statt, was unerwünscht ist.

Es ist somit eine Aufgabe der Erfindung, die Einstellung des optimalen Drucks in der Dämpferkammer zu vereinfachen. Diese Aufgabe wird durch die kennzeichnenden Merkmale des Anspruchs 1 gelöst.

Aus der DE-A-2 654 200 ist eine Vorrichtung bekannt, bei der der Rückprall durch einen im Gehäuse stillstehenden Anschlag aufgenommen wird. Der Schlag des Arbeitsgerätes auf den Anschlag wird über eine Flüssigkeitskammer auf das Gehäuse übertragen. Um den Anschlag in einer festen Lage relativ zum Gehäuse halten zu können, hat der Anschlag Steuerkanten, die mit Bohrungen im Gehäuse für die Zu- und Abfuhr der Flüssigkeit in der Art eines Servoventils zusammenwirken. Da der Schlag des Arbeitsgerätes auf den Anschlag durch eine inkompressible Flüssigkeit auf das Gehäuse übertragen wird, wird der Rückprall durch diese Anordnung kaum gedämpft.

Aus der FR-A-2 456 593 ist ferner ein Presslufthammer bekannt, bei welcher der Rückprall des Arbeitsgerätes ungedämpft auf das Gehäuse übertragen wird. Das Gehäuse ist axial gegenüber einem Halter mit Handgriffen verschiebbar. Zwischen dem Halter und dem Gehäuse befindet sich ein Luftpolster, das über eine konstante Drosselstelle, nämlich das Spiel zwischen Halter und Gehäuse, mit Druckluft beaufschlagt wird. Über zusammenwirkende Steuerkanten des Gehäuses und des Halters wird der Abfluss der Luft aus dem Luftpolster zur Atmosphäre so gesteuert, dass die mittlere Relativstellung zwischen Gehäuse und Halter unabhängig von der auf die Handgriffe aufgebrachten Kraft ist. Durch das Luftpolster wird die Übertragung der Reaktionskräfte der Schlagkolbenbewegung auf die Handgriffe gedämpft. Die Vorrichtung ist jedoch aufwendig und der Presslufthammer erheblich schwerer als herkömmliche Hammer.

Aus der US-A-4 363 365 ist ferner ein Vorschlag bekannt geworden, der ebenfalls die Merkmale des Oberbegriffs der Ansprüche 1 und 3 aufweist. Nebst der einen, durch einen konstanten Druck beaufschlagten Dämpferkammer ist eine zweite Dämpferkammer vorgesehen, die über Steuerkanten mit Druckluft aus der ersten Kammer versorgt wird, wobei der Dämpferkolben in der zweiten Kammer eine grössere wirksame Fläche hat als in der ersten Kammer. Da die zweite Kammer keinen Abfluss hat, herrscht in ihr effektiv ebenfalls Speisedruck und die Steuerkanten sind wirkungslos. Der Kolben wird gegen seinen Anschlag getrieben und überträgt den Rückprall ungedämpft auf das Gehäuse. Dieser Vorschlag ist daher nicht brauchbar.

Schliesslich ist aus der DE-A-1 954 936 eine hydropneumatische Federung bekannt, in welcher die mittlere Ölmenge in einem Hydraulikzylinder durch Steuerkanten des Kolbens derart gesteuert wird, dass die mittlere Lage des Kolbens im Zylinder unabhängig von der Belastung ist. Um den Ölverbrauch gering zu halten, wird der Ölabfluss über die Steuerkanten zusätzlich gedrosselt.

Nachfolgend wird ein Ausführungsbeispiel der Erfindung anhand der Zeichnungen erläutert. Darin zeigt:

Fig. 1 eine Schnittansicht des vorderen Teils eines Schlagwerkzeuges,

Fig. 2 eine Teilansicht einer ersten Variante der Drosselspaltanordnung,

Fig. 3 eine Teilansicht einer zweiten Variante der Drosselspaltanordnung,

Fig. 4 eine Teilansicht mit ähnlicher Ausbildung wie Fig. 1 jedoch mit einstückig verbundenem Amboss und Dämpferkolben, und

Fig. 5 eine Schnittansicht ähnlich Fig. 1, jedoch mit einem Halskolben anstelle eines Ambosses.

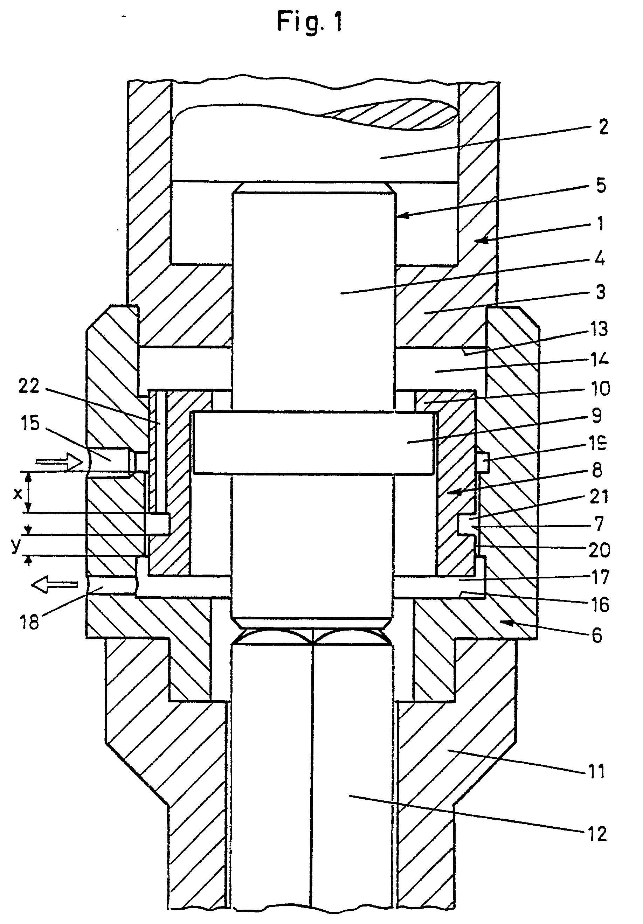

In Fig. 1 ist lediglich die Partie für die Schlagenergieübertragung dargestellt, der Schlagantrieb ist dabei unerheblich und kann eine bekannte Form haben, beispielsweise wie diejenige gemäss der vorerwähnten DE-E 26 10 990.

In einem Gerätegehäuse 1 befindet sich somit der nicht dargestellte Antrieb, von dem gerade noch ein Teil des Schlagkolbens 2 ersichtlich ist. In der Führungsplatte 3 des Gerätegehäuses 1 ist eine Kolbenstange 4 eines Ambosses 5 geführt gehalten.

Unter dem Gerätegehäuse 1 befindet sich ein Dämpfergehäuse 6 mit einem axialbeweglich in der Gehäusebohrung 7 geführten Dämpferkolben 8. Der Amboss 5 ist mit einem Flansch 9 und der Dämpferkolben 8 mit einem Kragen 10 versehen, derart, dass Flansch 9 und Kragen 10 sich wenigstens teilweise überdecken.

Das Gerätegehäuse 1 trägt in nicht näher dargestellter Weise eine Werkzeug-Futterbüchse 11, wie es in der Technik gut bekannt ist. Durch diese Futterbüchse 11 ragt von unten her der Schaft 12 eines Werkzeugs nach oben bis zur Berührung mit der Kolbenstange 4 des Ambosses 5.

Zwischen dem Kragen 10 des Dämpferkolbens 8 und der unteren Fläche 13 der Führungsplatte 3 ist eine Dämpferkammer 14 gebildet. Dies ist auch aus der vorgenannten DE-B 26 10 990 wenigstens in vergleichbarer Weise bekannt geworden.

Das Dämpfergehäuse 6 ist für den Anschluss eines Dämpfermediums mit einer ersten Öffnung 15 versehen und zwischen dem Dämpferkolben 8 und der Bodenpartie 16 des Dämpfergehäuses 6 ist ein Hohlraum 17 gebildet, der mittels einer zweiten, Öffnung 18 mit der Umwelt verbunden ist.

Die erste Öffnung 15 mündet in eine obere Ringnut 19 in der Gehäusebohrung 7. Oberhalb dieser Ringnut 19 ist die Gehäusebohrung 7 als Führungsfläche für den axialbeweglichen Dämpferkolben 8 und unterhalb mit einem Abstand vom Dämpferkolben 8 als Drosselspalt 20 ausgebildet.

In der Aussenwand des Dämpferkolbens 8 befindet sich eine zweite Ringnut 21 im Bereich des Drosselspaltes 20. Eine Bohrung 22 bildet einen Verbindungskanal zwischen der zweiten Ringnut 21 und der Dämpferkammer 14.

Die Arbeitsweise dieser Anordnung ist die folgende:

Beim Rückprall, d.h. bei der Aufwärtsbewegung nimmt der Amboss 5 mit seinem Flansch 9 den Dämpferkolben 8 mit. Das Polster in der Dämpferkammer 14 verhindert jedoch ein Aufschlagen des Ambosses 5 bzw. des Dämpferkolbens 8 an der unteren Fläche 13 der Führungsplatte 3.

Wenn nun die Vorschubkraft auf das Schlagwerkzeug erhöht wird, so ändert sich die Spaltlänge x zwischen der Ringnut 19 und der unteren Ringnut 21, d.h. sie wird durch Verlängerung der Spaltlänge y zwischen der Ringnut 21 und dem Hohlraum 17 kürzer. Diese Spaltlängen x und y haben demgemäss die Wirkung von Einlassdrossel für die Spaltlänge x und Auslassdrossel für die Spaltlänge y.

Damit wird der Druck in der unteren Ringnut 21 erhöht und dadurch steigt auch der Druck in der Dämpferkammer 14, so dass auch bei grosser Vorschubkraft der Dämpferkolben 8 nicht an der Fläche 13 anschlagen kann.

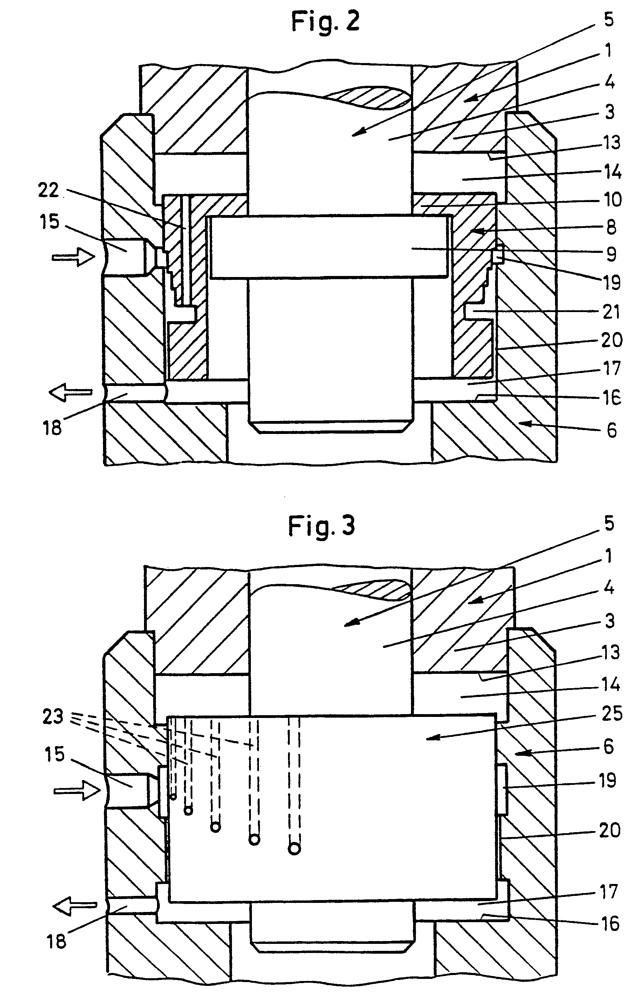

In den Anordnungen gemäss Fig. 2 und 3 sind dieselben Teile, die schon in Fig. 1 beschrieben wurden, mit denselben Bezugszeichen gekennzeichnet, es erübrigt sich damit eine weitergehende Beschreibung derselben.

In Fig. 2 ist der Umfang des Dämpferkolbens 8 im Bereich oberhalb der unteren Ringnute 21 bis zur oberen Ringnute 19 hin, also die Einlassdrossel, stufig ausgebildet, so dass die der Dämpferkammer 14 zugeführte Luftmenge schrittweise verändert wird. Anstelle der stufigen Ausbildung könnten auch eine kurvenartige Ausbildung oder besonders geformte Steuerkanten zur Erziehlung des gewünschten Effektes vorgesehen sein.

Eine gleiche Wirkung haben auch Kanäle 23 (Fig. 3) durch den Dämpferkolben 8 mit unterschiedlichen Durchmessern, die ähnlich den Stufen in Fig. 2, in verschiedenen Abständen von der Dämpferkammer 14 mit Steuerkanten 27 in der Mantelfläche des Dämpferkolbens 8 münden. Dadurch wird die untere Ringnut 21 aus Fig. 1 und 2 überflüssig und kann weggelassen werden.

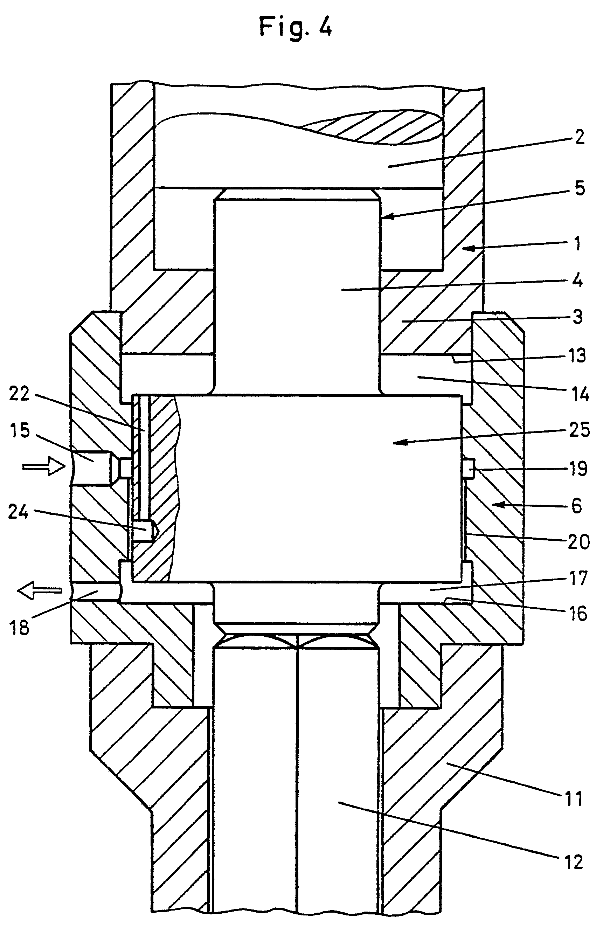

In Fig. 3 und 4 sind Dämpferkolben und Amboss gemäss Fig. 1 und 2 einstückig zu einem Dämpferkolben 25 vereinigt. Anstelle der unteren Ringnut der Fig. 1 und 2 ist lediglich eine radiale Öffnung 24 bis zum Kanal 22 vorhanden, wie dies auch schon bei Fig. 3 dargestellt wurde. Selbstverständlich könnte auch die obere Ringnut durch eine radiale Öffnung ersetzt sein, wenn die untere Öffnung entsprechend angepasst würde.

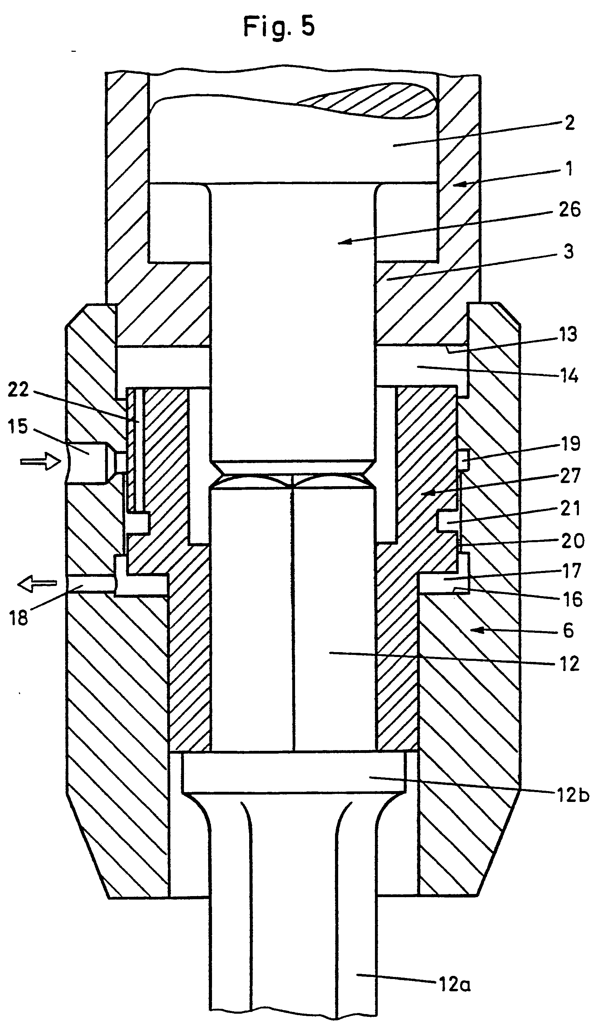

Schliesslich zeigt Fig. 5 eine weitere mögliche Variante ohne Amboss. Der Schlagkolben 2 ist mit einer Kolbenstange 26 verbunden und bildet einen Halskolben. Dieser Halskolben schlägt dann direkt auf den Schaft 12 eines Werkzeugs 12a. Der Kragen 12b des Werkzeugs 12a stösst an den Dämpferkolben 27 an. Dieser Dämpferkolben 27 ist in seinem oberen Bereich mit dem Dämpferkolben 8 in Fig. 1 vergleichbar ausgebildet. Er besitzt jedoch keinen Kragen. Der Rückprall des Werkzeuges erfolgt damit direkt auf den Dämpferkolben 27 und die Wirkungsweise ist dieselbe, wie schon anhand von Fig. 1 dargelegt wurde.

Selbstverständlich liegt es im Wissensbereich eines Fachmannes auf dem Gebiet der hydraulischen oder pneumatischen Steuerungen, die dargestellten Beispiele beliebig zu ergänzen oder zu verändern. So könnten auch die Anschlüsse 15, 18 in ihrer Lage vertauscht sein. Dazu müssten dann auch die Steuerkanten entsprechend geändert werden.

**Patentansprüche**

1. Verfahren zur Dämpfung des Rückpralls bei Schlagwerkzeugen, bei denen ein Arbeitsgerät (12) in eine in einem Gehäuse (1, 6) befindliche Futterbüchse (11) einsetzbar und durch einen mittels eines Druckmediums betätigten Schlagkolben (2) schlagend betätigt ist und bei denen auf das Gehäuse (1, 6) eine Vorschubkraft ausgeübt wird, wobei der Rückprall des Arbeitsgerätes (12) durch einen im Gehäuse (1, 6) axial verschiebbaren, durch den Druck eines gasförmigen Dämpfermediums in einer Dämpferkammer (14) beaufschlagten Dämpferkolben (8, 25, 27) auf das Gehäuse (1, 6) übertragen wird, dadurch gekennzeichnet, dass mit der durch das Gehäuse (1, 6) auf das Arbeitsgerät (12) einwirkenden Vorschubkraft der Druck des in der Dämpferkammer (14) befindlichen Dämpfermediums verändert wird.

2. Verfahren nach Patentanspruch 1, wobei die Dämpferkammer (14) über je eine Drossel (20) mit einem Einlass (15) und einem Auslass (18) für das Dämpfermedium verbunden ist, dadurch gekennzeichnet, dass mindestens eine der Drosseln (20) durch die Vorschubkraft verändert wird.

3. Vorrichtung zur Dämpfung des Rückpralls bei Schlagwerkzeugen, bei denen ein Arbeitsgerät (12) in eine in einem Gehäuse (1, 6) befindliche Futterbüchse (11) einsetzbar und durch einen mittels eines Druckmediums betätigten Schlagkolben (2) schlagend betätigt ist und bei denen auf das Gehäuse (1, 6) eine Vorschubkraft ausgeübt wird, wobei der Rückprall des Arbeitsgerätes (12) durch einen im Gehäuse (1, 6) axial verschiebbaren, durch den Druck eines gasförmigen Dämpfermediums in einer Dämpferkammer (14) beaufschlagten Dämpferkolben (8, 25, 27) auf das Gehäuse (1, 6) übertragen wird, dadurch gekennzeichnet, dass der Dämpferkolben (8, 25, 27) Mittel (21, 22, 23, 24) aufweist, um den Druck im Dämpfermedium in der Dämpferkammer (14) in Abhängigkeit der relativen axialen Verschiebung zwischen Dämpferkolben (8, 25, 27) und Gehäuse (6) zu verändern.

4. Vorrichtung nach Patentanspruch 3, wobei die Dämpferkammer (14) über je eine Drossel (20) mit einem Einlass (15) und einem Auslass (18) für das Dämpfermedium verbunden ist, dadurch gekennzeichnet, dass mindestens eine der Drosseln (20) durch die relative axiale Verschiebung zwischen Dämpferkolben (8, 25, 27) und Gehäuse (6) veränderbar ist.

5. Vorrichtung nach Patentanspruch 4, dadurch gekennzeichnet, dass die Dämpferkammer (14) über verstellbare Drosselwege (x, y) mit dem Einlass (15) und dem Auslass (18) verbunden ist.

6. Vorrichtung nach Patentanspruch 5, dadurch gekennzeichnet, dass Einlassdrossel (20) und Auslassdrossel (20) auf einer gemeinsamen Zylinderfläche angeordnet sind.

7. Vorrichtung nach Patentanspruch 5, dadurch gekennzeichnet, dass Einlassdrossel (20) und Auslassdrossel (20) sowie eine axiale Führung des Dämpferkolbens (25) auf einer gemeinsamen Zylinderfläche angeordnet sind.

8. Vorrichtung nach Patentanspruch 5, dadurch gekennzeichnet, dass der Dämpferkolben (8, 25, 27) in einer zylindrischen Bohrung des Gehäuses (6) geführt ist, dass diese Bohrung eine mit dem Einlass (15) verbundene Umfangsnut (19) aufweist, und dass mindestens eine der Drosseln (20) durch den Spalt zwischen zylindrischen Wandabschnitten des Dämpferkolbens (8, 25, 27) und des Gehäuses (6) gebildet ist.

**Claims**

1. A method for damping the rebound in percussion tools, in which a working apparatus (12) may be inserted into a chuck bushing (11) located in a housing (1, 6) and is operated percussively by an inpact piston (2) operated by means of a pressure medium and in which a thrust is exerted onto the housing (1, 6), the rebound of the working apparatus (12) being transmitted to the housing (1, 6) by a damper piston (8, 25, 27) displaceable axially in the housing (1, 6) and acted upon by the pressure of a gaseous damper medium in a damper chamber (14), characterized in that the pressure of the damper medium located in the damper chamber (14) is altered with the thrust acting on the working apparatus (12) by way of the housing (1, 6).

2. A method according to claim 1, the damper chamber (14) being connected by a throttle (20) to each of an inlet (15) an an outlet (18) for the damper medium, characterized in that at least one of the throttles (20) is altered by the thrust.

3. A device for damping the rebound in percusson tools, in which a working apparatus (12) may be inserted into a chuck bushing (11) located in a housing (1, 6) and is operated percussively by an impact piston (2) operated by means of a pressure medium and in which a thrust is exerted onto the housing (1, 6), the rebound of the working apparatus (12) being transmitted to the housing (1, 6) by a damper piston (8, 25, 27) displaceable axially in the housing (1, 6) and acted upon by the pressure of a gaseous damper medium in a damper chamber (14), characterized in that the damper piston (8, 25, 27) comprises means (21, 22, 23, 24) of altering the pressure in the damper medium in the damper chamber (14) in dependence on the relative axial displacement between the damper piston (8, 25, 27) and the housing (6).

4. A device according to claim 3, the damper chamber (14) being connected by a throttle (20) to each of an inlet (15) and an outlet (18) for the damper medium, characterized in that at least one of the throttles (20) can be altered by the relative axial displacement between the damper piston (8, 25, 27) and the housing (6).

5. A device according to claim 4, characterized in that the damper chamber (14) is connected by means of adjustable throttling paths (x,y) with the inlet (15) and the outlet (18).

6. A device according to claim 5, characterized in that the inlet throttle (20) and the outlet throttle (20) are arranged on a common cylindrical surface.

7. A device according to claim 5, characterized in that the inlet throttle (20) and the outlet throttle (20) and an axial guide for the damper piston (25) are arranged on a common cylindrical surface.

8. A device according to claim 5, characterized in that the damper piston (8, 25, 27) is guided in a cylindrical bore in the housing (6), in that this bore comprises a circumferential groove (19) connected with the inlet (15), and in that at least one of the throttles (20) is formed by the gap between cylindrical wall sections of the damper piston (8, 25, 27) and the housing (6).

**Revendications**

1. Procédé pour l'amortissement du rebond dans des outils à percussion dans lesquels un outil (12) est insérable dans une douille porte-foret ( 11) se trouvant dans un carter (1, 6) et est actionné à la percussion par un piston frappeur (2) commandé au moyen d'un fluide sous pression, et dans lesquels une force d'avance est exercée sur le carter (1, 6), le rebond de l'outil (12) étant transmis au carter (1, 6) par un piston amortisseur (8, 25, 27) mobile axialement dans le carter (1, 6) et soumis à la pression d'un fluide amortisseur gazeux dans une chambre d'amortissement (14), caractérisé en ce que la pression du fluide amortisseur qui se trouve dans la chambre d'amortissement (14) est modifiée avec la force d'avance exercée sur l'outil (12) par le carter (1, 6).

2. Procédé selon la revendication 1, la chambre d'amortissement (14) étant en communication, par des étranglements respectifs (20), avec une admission (15) et un échappement (18) pour le fluide amortisseur, caractérisé en ce que l'un au moins des étranglements (20) est modifié par la force d'avance.

3. Dispositif pour l'amortissement du rebond dans des outils à percussion dans lesquels un outil (12) est insérable dans une douille porte-foret (11) se trouvant dans un carter ( 1, 6) et est actionné à la percussion par un piston frappeur (2) commandé au moyen d'un fluide sous pression, et dans lesquels une force d'avance est exercée sur le carter (1, 6), le rebond de l'outil (12) étant transmis au carter (1, 6) par un piston amortisseur (8, 25, 27) mobile axialement dans le carter (1, 6) et soumis à la pression d'un fluide amortisseur gazeux dans une chambre d'amortissement ( 14), caractérisé en ce que le piston amortisseur (8, 25, 27) comporte des moyens (21, 22, 23, 24) pour modifier la pression du fluide amortisseur dans la chambre d'amortissement (14) en fonction du déplacement axial relatif entre le piston amortisseur (8, 25, 27) et le carter (6).

4. Dispositif selon la revendication 3, la chambre d'amortissement (14) étant en communication, par des étranglements respectifs (20), avec une admission (15) et un échappement (18) pour le fluide amortisseur, caractérisé en ce que l'un au moins des étranglements (20) peut être modifié par le déplacement axial relatif entre le piston amortisseur (8, 25, 27) et le carter (6).

5. Dispositif selon la revendication 4, caractérisé en ce que la chambre d'amortissement (14) est en communication avec l'admission ( 15) et l'échappement (18) par des trajets d'étranglement réglables (x, y).

6. Dispositif selon la revendication 5, caractérisé en ce que l'étranglement d'admission (20) et l'étranglement d'échappement (20) sont disposés sur une surface cylindrique commune.

7. Dispositif selon la revendication 5, caractérisé en ce que l'étranglement d'admission (20) et l'étranglement d'échappement (20), ainsi qu'un guide axial du piston amortisseur (25) sont disposés sur une surface cylindrique commune.

8. Dispositif selon la revendication 5, caractérisé en ce que le piston amortisseur (8, 25, 27) est guidé dans une forure cylindrique du carter (6), en ce que cette forure comporte une rainure circonférentielle (19) en conmunication avec l'admission (15) et en ce que l'un au moins des étranglements (20) est formé par la fente entre des parties de paroi cylindriques du piston amortisseur (8, 25, 27) et le carter (6).

# Fig. 1

**Fig. 2**

**Fig. 3**

# Fig. 4

## Fig. 5